(19) Europäisches Patentamt
European Patent Office
Office européen des brevets

(11) **EP 2 780 218 B1**

(12) **EUROPEAN PATENT SPECIFICATION**

(45) Date of publication and mention
of the grant of the patent:
**04.04.2018 Bulletin 2018/14**

(51) Int Cl.:
***F21S 41/143*** *(2018.01)*   ***F21S 45/48*** *(2018.01)*
***F21S 45/60*** *(2018.01)*

(21) Application number: **12844725.7**

(22) Date of filing: **09.02.2012**

(86) International application number:
**PCT/US2012/024492**

(87) International publication number:
**WO 2013/066379 (10.05.2013 Gazette 2013/19)**

(54) **HEADLAMP ASSEMBLY WITH WIRE HEATING ELEMENT FOR REMOVING WATER BASED CONTAMINATION**

SCHEINWERFERANORDNUNG MIT EINEM DRAHTHEIZELEMENT ZUR ENTFERNUNG VON WASSERKONTAMINATIONEN

ENSEMBLE LAMPE FRONTALE DOTÉE D'UN ÉLÉMENT DE CHAUFFAGE DE FIL MÉTALLIQUE PERMETTANT D'ÉLIMINER UNE CONTAMINATION À BASE D'EAU

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **04.11.2011 US 201113289832**

(43) Date of publication of application:
**24.09.2014 Bulletin 2014/39**

(73) Proprietors:
• **Truck-Lite Co., LLC**
  **Falconer NY 14733 (US)**
• **Marley, Michael**
  **Erie, PA 16508-1411 (US)**

(72) Inventor: **MARLEY, Michael**
  **Erie, PA 16508 (US)**

(74) Representative: **De Anna, Pier Luigi**
  **DeAnna-Patent**
  **Schubertstraße 10**
  **80336 München (DE)**

(56) References cited:

| | |
|---|---|
| **JP-A- 2006 032 137** | **US-A1- 2004 027 834** |
| **US-A1- 2006 011 598** | **US-A1- 2006 011 598** |
| **US-A1- 2006 232 972** | **US-A1- 2006 232 972** |
| **US-A1- 2009 097 247** | **US-A1- 2010 008 085** |
| **US-A1- 2010 008 099** | **US-A1- 2010 128 483** |
| **US-B1- 6 367 949** | **US-B1- 6 367 949** |
| **US-B1- 7 211 771** | **US-B1- 7 914 162** |
| **US-B1- 7 914 162** | |

# Description

## SUMMARY

Embodiments disclosed herein relate generally to a lighting system which comprises a means for removing and/or preventing water based contamination from forming or accumulating on areas of an optical lens used in conjunction with a light emitting diode (LED) lamp.

A mechanism for reducing water based contamination in a headlamp assembly is provided. The mechanism uses some of the heat created by a LED emitter or other heat-generating devices within the headlamp assembly, to heat the lens area of a LED lamp. Thus, the heat prevents build-up of water-based contamination in the form of snow or ice on the lens, and heat is drawn away from the heat-generating devices, thereby extending the useful life of a LED circuit and emitter which may deteriorate prematurely when exposed to elevated temperatures generated by the LED and associated components. In addition, one or more resistive heating elements, in the interior of the headlamp may be utilized in conjunction with heat radiating from the LED in order to remove water-based contamination from a LED lamp assembly. An optically- clear thermal transfer fluid may be utilized in the interior of a LED lamp to heat the lens structure in order to prevent accumulation of water-based contamination on the LED lamp. The published patent application US-A-2010/0008099 discloses the features of the preamble of claim 1.

## BRIEF DESCRIPTION OF THE DRAWINGS

FIG. 1 shows an assembled front view of one embodiment of a LED lamp assembly.

Figure 2A is an exploded view of a lens assembly for a headlamp assembly.

FIG. 2B is an exploded view of the LED lamp shown in FIG. 1.

FIG. 3A shows an exploded view of an embodiment a lens assembly with a resistor there between.

FIG. 3B shows an assembled view of the lens assembly of FIG. 3A.

FIG. 3C is a schematic representation of a resistive heating element.

FIG. 4A is a schematic representation of another embodiment of a mechanism for reducing water based contamination from a headlamp assembly.

FIG 4B schematic representation of another embodiment of a mechanism for reducing water based contamination from a headlamp assembly.

FIG. 5 illustrates a cross-sectional view a mechanism for reducing water based contamination from a headlamp assembly.

Figures 6A and 6B are cross-sectional views of a mechanism for reducing water based contamination from a headlamp assembly having side channels.

Figures 7a and 7b are cross-sectional views embodiments of a mechanism for reducing water based contamination from a headlamp assembly using a circulation system.

Figures 8a, 8b, and 8c are cross-sectional view of a mechanism for reducing water based contamination from a headlamp assembly including a solid state heat pump.

Figs. 9a and 9b represent alternative embodiments of a mechanism for reducing water based contamination from a headlamp assembly utilizing a single lens structure.

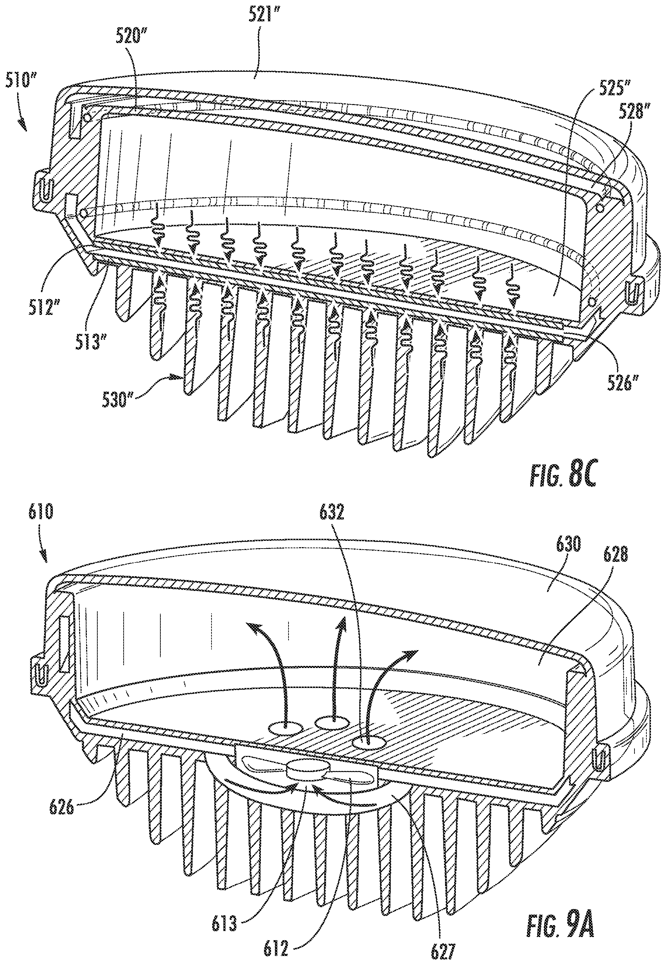

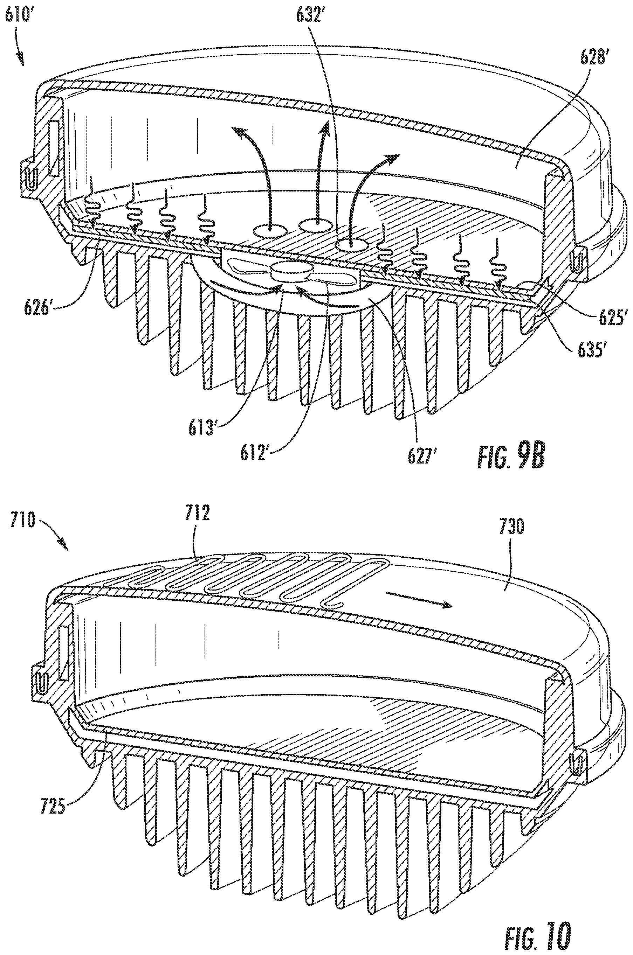

FIG. 9 shows a method of embedding a wire in a polycarbonate lens structure.

Figures 10-13 illustrates embodiments of a mechanism for reducing water based contamination from a headlamp assembly including resistive heating elements embedded the outer lens.

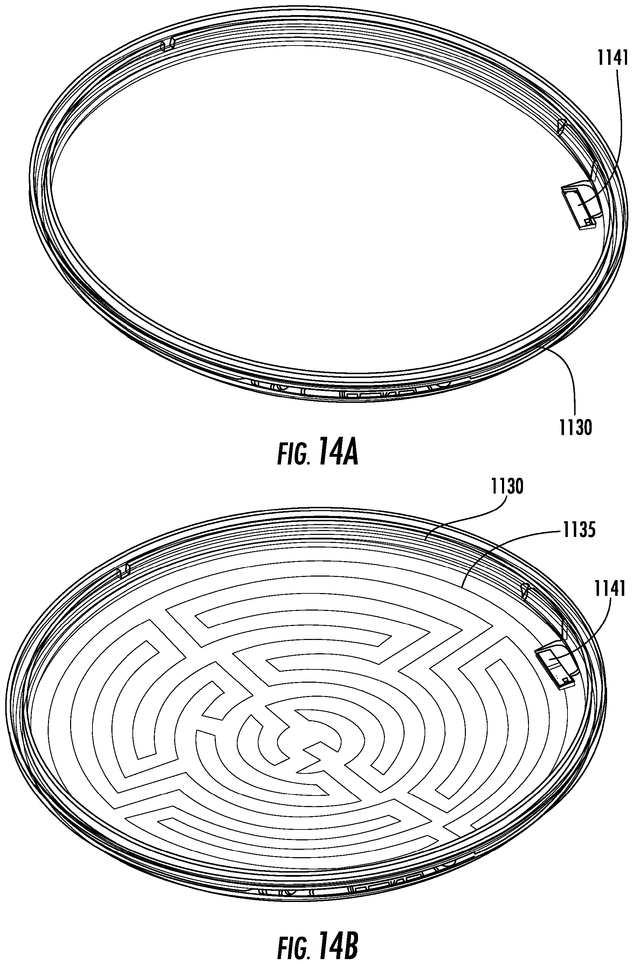

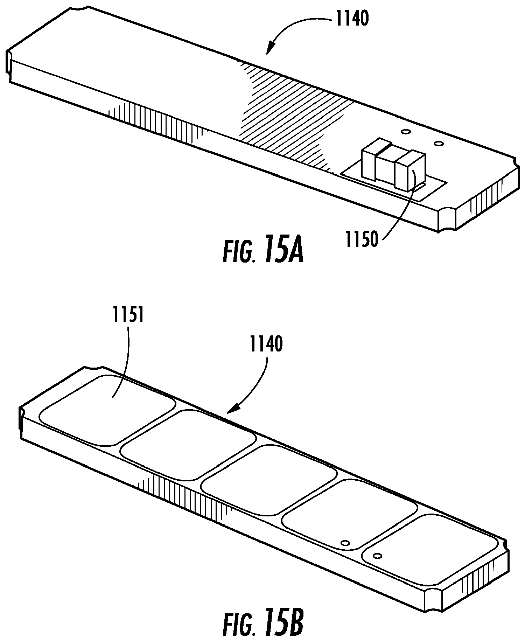

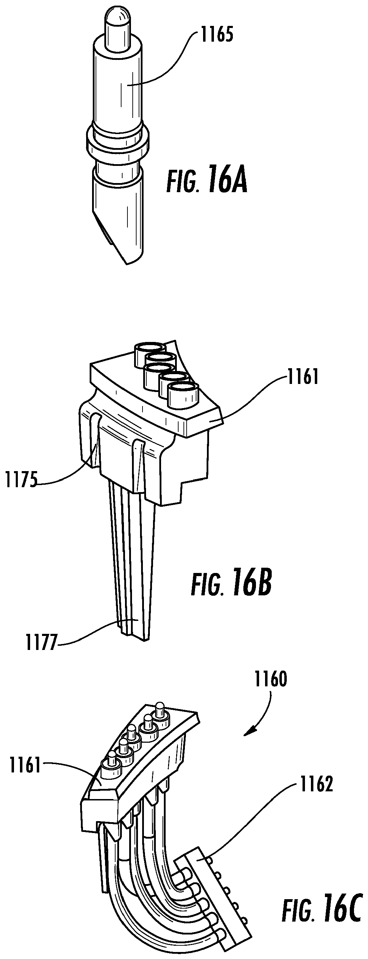

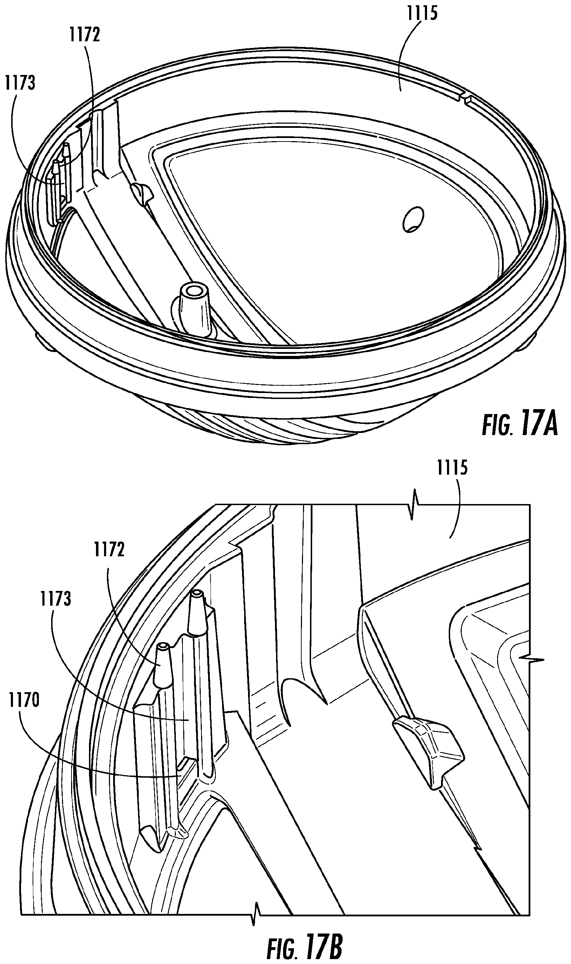

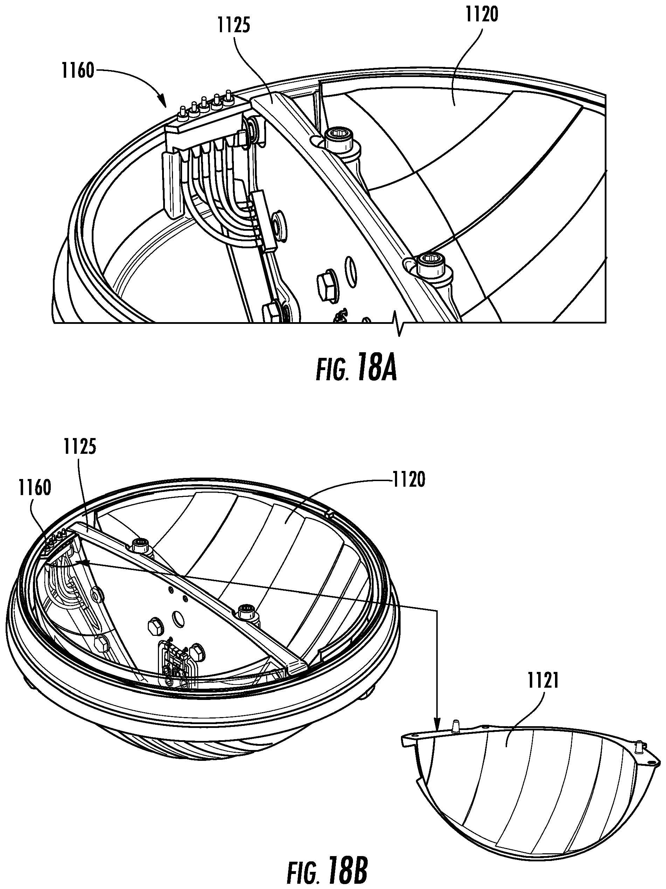

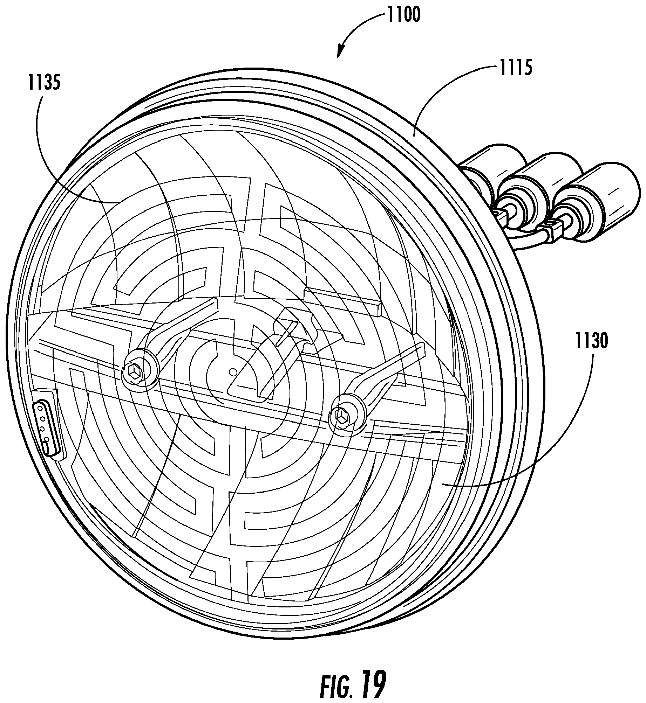

Figures 14a-19 illustrate an additional embodiment.

## DETAILED DESCRIPTION OF REPRESENTATIVE EMBODIMENTS

For purpose of promoting an understanding of embodiments described herein, references are made to embodiments of a vehicle light emitting diode (LED) headlamp assembly and method of making only some of which are illustrated in the drawings. It is nevertheless understood that no limitations to the scope of any embodiments disclosed are thereby intended. One of ordinary skill in the art will readily appreciate that modifications such as the component geometry and materials, the positioning of components, type of heating and control devices, and the type of electrical connections do not depart from the scope of any embodiments disclosed herein. Some of these possible modifications are mentioned in the following description. Furthermore, in the embodiments depicted, like reference numerals refer to identical structural elements in the various drawings.

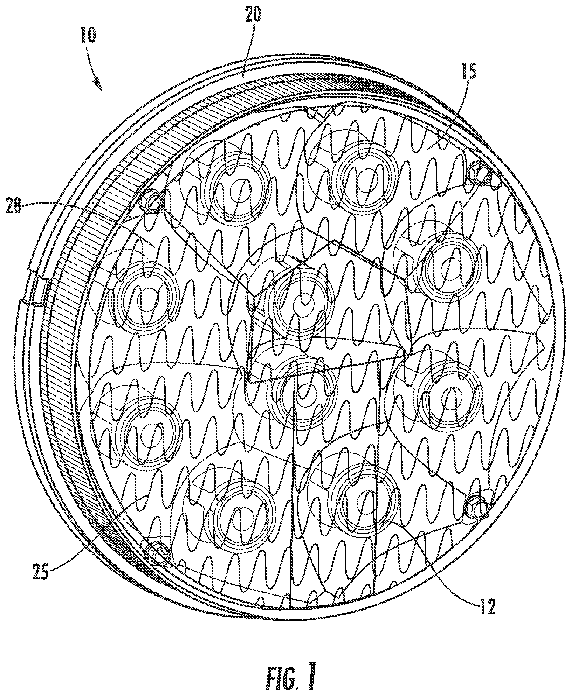

A headlamp assembly 10 in accordance with an embodiment of the invention is illustrated in Figure 1. In the embodiment illustrated, headlamp assembly includes a plurality of light emitting diodes, one of which is indicated at 12. Those of skill in the art will appreciate that the quantity of Light emitting diodes depicted should not be construed as limiting, in that more or less Light emitting diodes may be utilized depending on the application of the headlamp. Headlamp assembly 10 includes a lens assembly 15 and a housing 20. Lens assembly 15 is formed of a material that prevents Light emitting diodes 12 from being exposed to the outside environment. For example, lens may be formed of polyester, polycarbonate, or glass. In addition, lens assembly 15 may be a single or dual lens structure, which will be described in detail below. In the embodiment shown in Figure 1, heating elements 25 are incorporated into lens assembly 15 for assisting in the removal of water based contamination.

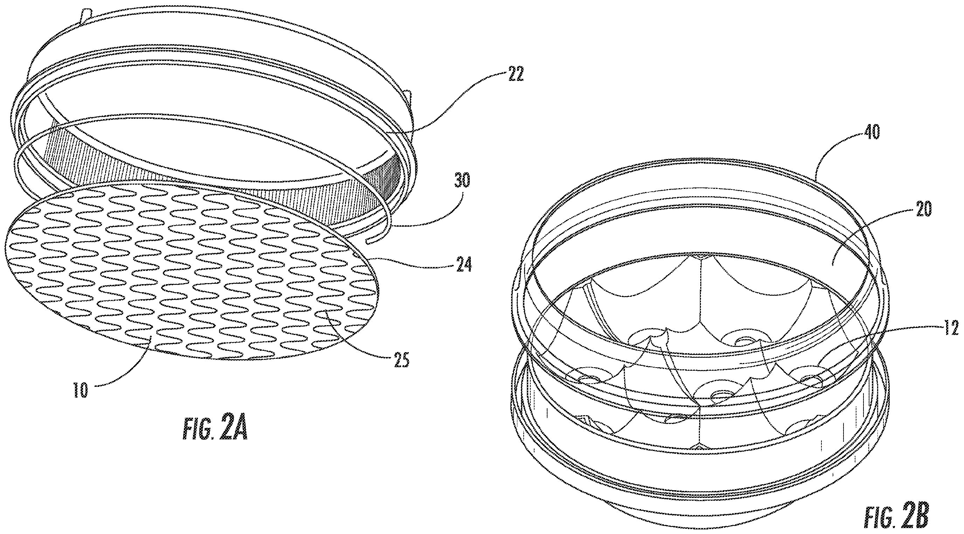

Figure 2A is an exploded view of a lens assembly 9 for a headlamp assembly 10. An inner lens layer 14 and an outer lens layer 15, which includes side perimeter 16 terminating at ledge 22, are shown along with sealing element 31. A resistive element 25 is installed between inner lens layer 14 and outer layer 15 using an optically clear acrylic based pressure sensitive adhesive as a filler and bonding agent. Inner and outer lenses (14, 15) may be formed of polycarbonate, polyester, polyester, or glass.

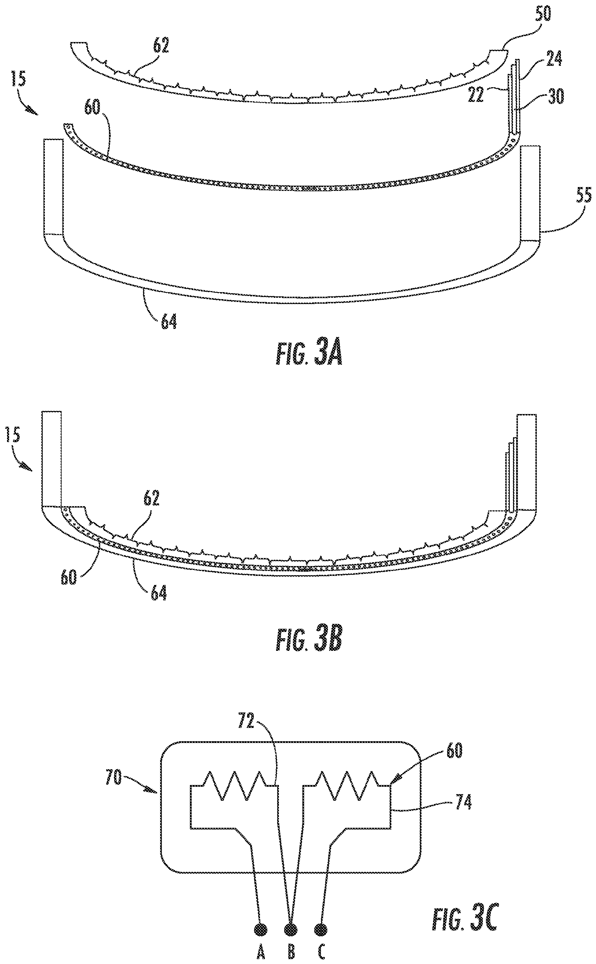

Figure 2B is an exploded view of a headlamp assembly 10, of one embodiment which comprises a circuit board, light emitting diodes 12, housing 26, an inner and outer lenses joined by adhesive to form lens assembly. The lens assembly of figure 2A attaches to housing 26 to form headlamp assembly 10. Figure 3a is an exploded view of an embodiment of lens assembly 15 for use with headlamp assembly 10. As depicted, lens assembly 15 is a composite lens including inner lens 50 and outer lens 55 with resistive heating element 60 positioned therebetween. Inner and outer lens layers 50 and 55 may be formed of an optical grade material, such as polycarbonate or glass. An adhesive material of an optical grade, i.e. an acrylic based adhesive, is applied on upper and lower sides of heating element 60, which is an electrically resistive element having a small enough diameter that it does not interfere with the optical performance of lens assembly 15. By way of example, suitable alternative adhesives include thermally-activated or thermosetting adhesives, hot melt, chemically-activated adhesives such as those utilizing cross-linking agents, UV- activated light curing materials (LCM), encapsulated adhesives, and the like. Thus, lens assembly 15 is manufactured to fit together with sufficient precision as to have the same effect as a single layer lens. To accomplish this, the index of refraction of each material used in the lens assembly must be known in addition to the geometry. Then, modifications to the geometries of each lens layer may be considered to ensure starting and ending light path of light rays passing through lens assembly 15 matches that of a single layer lens that lens assembly 15 is replacing. The index of refraction for all points of interest across the lens surfaces may be determined using the following equation:

$$\sin \alpha_{resul} = \frac{n_{incid}}{n_{resul}} \sin \alpha_{incid}$$

Wherein:

- $\alpha_{resul}$ is the angle between a ray that has passed through a surface from one media to another and the normal line at the point on the surface where the ray passes through
- $n_{incid}$ is the refractory index of the material that the ray is traveling within as it approaches an interface surface between two media.
- $n_{resul}$ is the refractory index of the material that the ray passes into once it crosses the interface surface between two media.
- $\alpha_{incid}$ is the angle between a ray as it approaches a surface between one media and another and the normal line at point on the surface where the ray passes through.

Heating element 60 may be formed of copper or other base material that would operate within the voltage and current limitations necessary for removing water based contamination from lens assembly 15. For example, heating element 60 may operate at a voltage of 12-24 VDC/VAC. A maximum power of 0.1255 Watts / $cm^2$ lens area may also be applied. More particularly, heating element 60 may have specific resistance as determined by the required power density, operating voltage, and specific lens area in order for heating element 60 to be capable of removing an average of 3.095 milligrams of ice / $cm^2$ of lens area / minute over a maximum 30 minute duration when headlamp assembly 10 has been held at -35°C for a period not shorter than 30 minutes in an environment chamber with the environment chamber fully active for both 30 minute durations. The total power (in watts) can be determined by multiplying the effective area of lens assembly 15 required to be cleared of water based contamination (in $cm^2$) times the power per lens area. Thus, resistance of the heating element 60 is dependent upon the type of material used to make resistive heating element 60, as well as its diameter. In some embodiments resistive heating element 30 may be formed by depositing a layer of indium tin oxide (ITO) metal film on a polyester sheet, such as manufactured by Minco(R). The diameter of heating element 60 may be in the range of 10 to 20 microns. In one embodiment, heating element 60 is configured in a pattern and disposed between two sheets of polyester, such as Thermal- Clear(TM). In some alternate embodiments heating element 60 may be formed by depositing a layer of indium tin oxide (ITO) metal film on a polyester sheet, such as manufactured by Minco(R). In addition, the material used to make heating element 60 may be copper or a transparent conducting oxide such as indium tin oxide (ITO), fluorine-doped tin oxide (FTO), and doped zinc oxide or other similarly conductive and optically transparent materials.

Lens assembly 15 is shown in an assembled configuration in Figure 3b. In one embodiment, lens assembly 15 is formed by laying heating element 60 in a pressure sensitive adhesive material using a robotic fixture device or other controllable / repeatable means capable of placing heating element 60. Heating element 60, containing adhesive, is then sandwiched between lens layers, 50 and 55, which are pressed together using a clamp, ram, vice, or other means of applying a clamping force to lens assembly 15 by contacting an inner surface 62 of inner lens 50 and an outside surface 63 of outer lens 55 with compliant interfaces (rubber blocks, etc). The compliant interfaces may be shaped such that they contact center portions of inner and outer lenses, 50 and 55, prior to deforming to make contact with the remainder of inner surface 62 and outer surface 64 for the purpose of dispelling air and other entrapped gases.

Alternatively, heating element 60 or wire may be embedded within a lens via an ultrasonic procedure. Essentially, the procedure begins with determining a mounting location in the lens substrate. Next, a wire is threaded onto an embedding tool known as a sonotrode. The sonotrode aids in pressing the wire against the lens substrate, and comprises an ultrasonic transducer, which heats the wire by friction. The molecules of the polycarbonate substrate simultaneously vibrate very quickly, so that the lens material melts in the area of the aperture. Accordingly, the wire is embedded into the polycarbonate substrate by use of pressure and heat. A final step in the process entails connecting ends of the wire that are not embedded, to terminals on the lens substrate.

FIG. 3c shows a view of a circuit 70 used in one embodiment providing power to heating element 60. Circuit 70 comprises a resistive heating element 60 made from a thin wire, comprising any of various materials including copper, indium tin oxide (ITO), fluorine-doped tin oxide (FTO), and doped zinc oxide. Preferably, materials selected for heating element 60 should be optically transparent, and be capable of resisting fluctuations in current flow direction. Heating element 60 is configured as a pair of metallic or metallic oxide loops connected in parallel. A first loop 72 is connected to leads A and B. A second loop 74 is connected to leads B and C. The circuit construction allows for the use of either 24 volt or 12 volt systems at the same power level. Thus, for 24 volt operation, only leads A and C are utilized. For 12 volt operation, leads A and C are connected together to one pole and lead B to the other pole.

A simple control system 100 may be used to allow heating element 60 to operate automatically. Automatic or manual control logic would dictate that as long as the ambient temperature local to lens assembly is within temperature range wherein water based contamination may occur, heating element 60 is active (powered on). An automatic control system could be constructed of a comparator that switches heating element 60 on or off based on the resistance value of heating element 60 (which would vary with temperature). The resistance value may be compared to a set threshold resistance associated with a maximum temperature of the range wherein water based contamination may occur. Then, if the resistance value is at or below the threshold, the comparator switches to close the circuit providing power to heating element 60 and remains in that state. Conversely, if the resistance value is above the threshold resistance, the comparator switches to open the circuit disrupting power to the mechanism, which remains in an off state. The threshold value could be determined by calculation using the material properties of the resistive element, adhesive, and lens material and geometries and verified through empirical testing or just determined through empirical testing. Alternatively, the control system may use a separate electronic temperature indicating device. The control system could simply be a switch that is operated manually, it could be controlled by a programmable logic controller, or other means of switching the device on / off, or the device could be left on all the time.

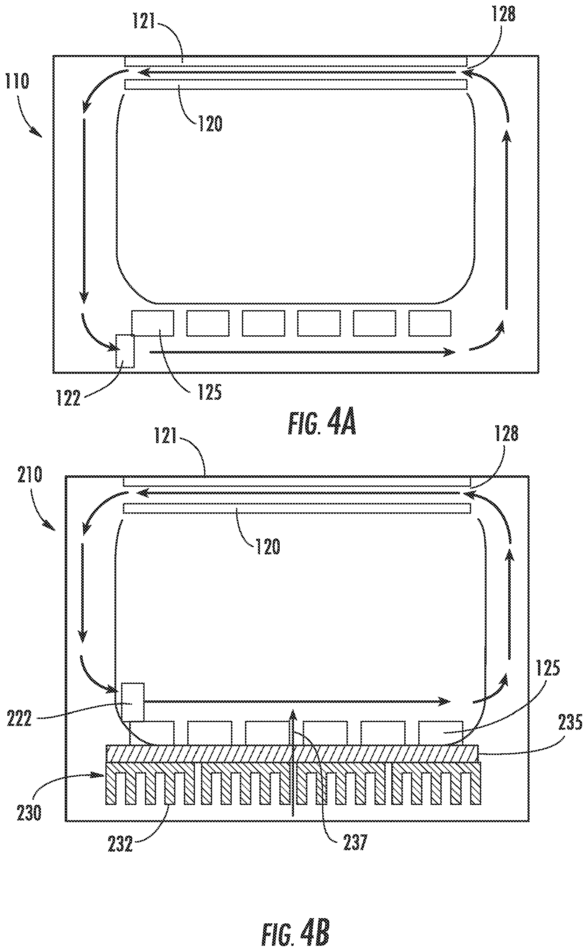

Fig. 4A is a schematic representation of another embodiment of a mechanism 110 for reducing water based contamination from a headlamp assembly 10. Mechanism 110 includes inner and outer lenses 120 and 121 and an energy source that dissipates energy in the form of heat. The energy source may be light emitting diodes 125, or any other part that dissipates energy in the form of heat either by mechanic or electrical principles. An optically clear fluid, in gaseous or liquid form, is directed past energy sources (Light emitting diodes 125) with a mechanically or electrically operated pump, fan, compressor or the like. In the embodiment shown, a fan 122 is used to circulate the fluid. Free convection may also be used to transfer heat energy from energy sources 125 to mass particles contained in the fluid, which is then directed through a channel 128 between inner lens 120 and outer lens 121. Heat energy is then transferred from the fluid mass particles to lenses 120 and 121 such that accumulation of water based contamination cannot occur. The heat energy also removes any previously accumulated water based contamination from lenses 120 and 121. Mechanism 110 may be used alone or in conjunction with another device, such as a heating element, in order to provide sufficient energy to lenses 120 and 121. The fluid may be channeled using existing geometries within lens assembly 15 and additional geometries may be added to provide passages for the fluid. The fluid may be partly or completely encapsulated or free flowing against lenses 120 and 121. In the embodiment illustrated in Figure 4a, channel 128 facilitates the transfer of cool air originating from outer lens 121, which is exposed to the outside of the headlamp, toward light emitting diodes 125 in order to decrease the temperature of light emitting diodes 125. Thus, mechanism 110 provides a means of distributing heated and cooled fluid within headlamp assembly 10. It will be appreciated by those of skill in the art that the "fluid" as used herein may comprise liquid, gaseous substances, including air or other vapors, freeflowing polymeric fluids, partially or completely encapsulated fluids, as well as fluids comprising mass particles. Representative heat transfer fluids known in the art may also include polyolefins, polyalphaolefins, diphenylethanes, and the like, manufactured and sold by Radco(R).

Figure 4B is schematic representation of an embodiment of a mechanism 210 for reducing water based contamination from a headlamp assembly 10. Similar to the embodiment described in conjunction with Figure 4a, mechanism 210 includes inner and outer lenses 220 and 221 having a channel 128 therebetween, a fan 222 and light emitting diodes 225 that dissipate energy in the form of heat. In addition, mechanism 210 includes a heat sink 230 having fins 232. A solid state heat pump 235, such as a Peltier device, may be inserted between heat sink 230 and light emitting diodes 125. When energized solid state heat pump 235 acts to reverse the direction of energy transfer to cause energy to flow from heat sink 230 to light emitting diodes 125, as indicated by arrow 237, under controlled conditions wherein light emitting diodes 125 would not become damaged due to overheating.

The transfer of heat towards light emitting diodes 125 may be used when the temperature local to mechanism 210 and light emitting diodes 125 is sufficiently low that the conditions are correct for water based contamination to develop or accumulate on outer lens 121. Heat pump 235 also increases the energy that is transferred from light emitting diode to the fluid, thereby more effectively providing energy to outer lens 121 for the purpose of removing water based contamination. Additional solid state heat pumps, or other types of heat pumps, may be used at other locations anywhere surrounding a fluid channel that is being used for the purpose of transferring energy as described above.

As is known in the art, Peltier heat pump 235, operates based on the Thomson Effect, which is based upon the principle that electric potential difference is proportional to temperature difference. Specifically, a thermal gradient is created when a temperature difference along a conductor is present such that one part of the conductor is warmer, while the other is colder. Thermal energy in the form of electrons, will inherently travel from the warmer portion of the conductor to the colder portion.

In terms of polarity, electrons normally travel from positive to negative. The Peltier Effect involves the discovery that when current flows through a circuit comprising two or more metals of varying electronic properties (ex, n-type vs. p- type), the current drives a transfer of heat from one junction to the other. However, when the polarity is reversed as is the case under an applied voltage, electrons will travel in the opposite direction (i.e., from negative to positive).

Similarly, heat transfer will also occur in the opposite direction. Thus, the direction of heat transfer may be controlled by manipulating the polarity of current running through Peltier heat pump 235.

Heat created by light emitting diodes 125, circuit board (not shown in Figure 4b), or other heat generating devices may be absorbed by heat sink 230. In order to prevent absorbed heat from being exhausted to the atmosphere via fins 232, heat pump 235 may be activated in order to transport heat from heat sink 230 to a channel located below the heat sink. In one embodiment, sensors may be utilized to monitor when the temperature of the fluid drops below a certain level, at which time a control circuit may activate heat pump 235 in order to transport stored heat from heat sink 230 to thereby promote circulation of heated fluid within mechanism 210. Heat sink 230, which collects and stores heat originating from heat generating devices. These heat generating devices may include Light emitting diodes, resistors, fans or air pumps, power electronics including but not limited to linear and switch mode current regulators, which may be required to drive or regulate power within the lamp. Essentially, heat sink 330 may collect heat from any device that creates heat within the lamp, whether or not it is the device's primary function to do so. Subsequently, heat collected by heat sink 330 may be exhausted to the atmosphere via fins 332.

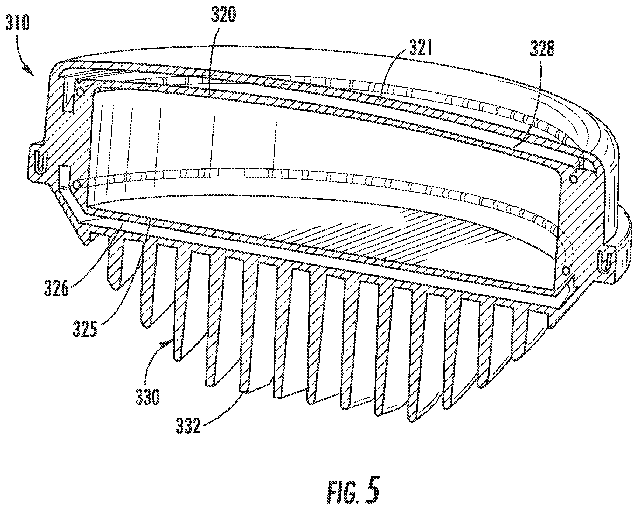

Fig. 5 illustrates a cross-sectional view a mechanism 310 for reducing water based contamination from a headlamp assembly 10. Mechanism 310 includes an inner lens 320 and outer lens 321 and heat sources, including light emitting diodes and a circuit board 325. A channel 326 is located below circuit board 325 for allowing the passage of fluid. As discussed above, heat generated by light emitting diodes and associated circuitry on circuit board 325 is transferred to channel 326 via a convection process.

A channel 328 for transferring fluid is also located between inner and outer lenses 320 and 321. Subsequently, a portion of the heat transferred to channel 326, exits mechanism 310 via heat sink 330 having fins 332.

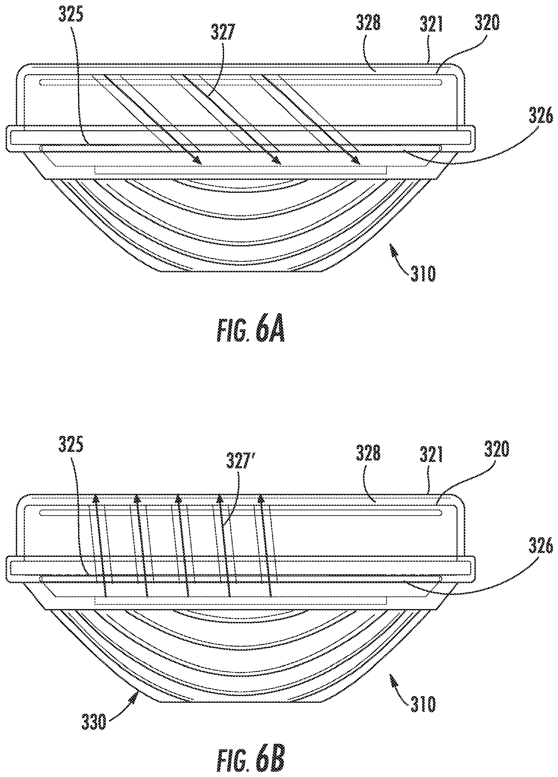

More specifically, a free-convection process may be utilized to circulate fluid between inner and outer lenses 320 and 321 in order to maximize melting of snow and ice from outer lens 321. In this embodiment, heat is transferred to fluid by use of geometries within the lens structure. The initial temperature of channel 328 is cold. Second fluid-flow channel 326 is located below circuit board 325 and facilitates absorbance of heat originating from circuit board 325. Thus, the initial temperature of channel 326 is hot. As illustrated in Figures 6a and 6b, side channels 327, 327' located in opposite sidewalls of mechanism 310 connect channels 326 and 328. The channels may be formed at an angle in the range of 10 to 30 degrees, as in Figure 6a, to an angle of approximately 120 to 150 degrees, as in Figure 6b. Angled side channels 327, 327' as well as channels 326 and 328 represent a system of channels enabling heated fluid to flow within mechanism 310 via a free convection process enhanced by gravity, density, and buoyancy. This process optimizes fluid flow within the dual lens structure, brought about by absorption and desorption of heat as discussed infra.

Heated fluid located in channel 326, is inherently less dense than colder fluid located in channel 328. Gravitational acceleration creates a buoyant force causing colder, heavier fluid in channel 328 to move down to displace the warmer fluid in channel 326. As the cold fluid collects in channel 326, it absorbs heat from circuit board 325, light emitting diodes, and other heat-generating devices. As the fluid becomes warmer, viscous forces of the fluid are decreased and buoyant forces which encourage fluid flow are increased. Buoyant forces thus overtake the viscous forces of the fluid, and flow is commenced toward channels 328. Pressure within the side channels is minimized by optimizing the cross-sectional area of the channels so that cross-sectional area increases in the direction of desired fluid flow. Accordingly, fluid flow within the side channels is promoted in the direction of channel 328, and resisted in the direction of channel 326. Once the fluid reaches channel 328 its heat is desorbed by snow and ice accumulating on outer lens 321. This steady state process repeats itself continuously, until outer lens 321 is free from water-based contamination caused by cold outdoor temperatures.

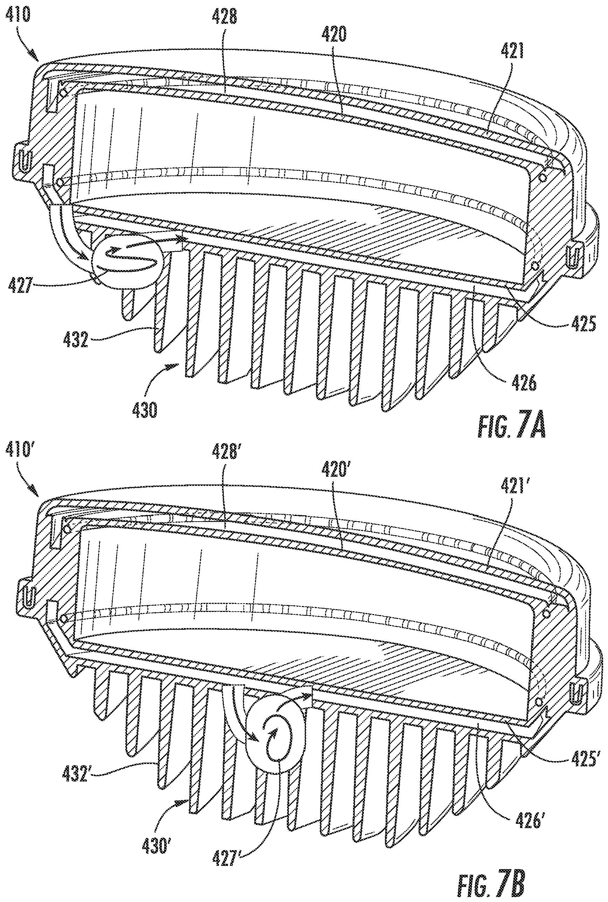

Figure 7a is a cross-sectional view of another embodiment of a mechanism 410 for reducing water based contamination from a headlamp assembly 10. Mechanism 410 includes an inner lens 420 and outer lens 421 and heat sources, including light emitting diodes and a circuit board 425. A channel 426 is located below circuit board 425 for allowing the passage of air. As discussed above, heat generated by light emitting diodes and associated circuitry on circuit board 425 is transferred to channel 426 via a convection process. A circulation device such as fan 427 is provided to further encourage circulation of air within mechanism 410. A channel 428 for transferring fluid is also located between inner and outer lenses 420 and 421. Subsequently, a portion of the heat transferred to channel 426, exits mechanism 410 via heat sink 430 having fins 432.

Figure 7b is a cross-sectional view of mechanism 410' wherein a liquid is circulated within channels 426' and 428'. As discussed above the liquid may be a heat transfer fluid known in the art such as polyolefins, polyalphaolefins, diphenylethanes, and the like. A pump 427' is provided to circulate the liquid within mechanism 410.

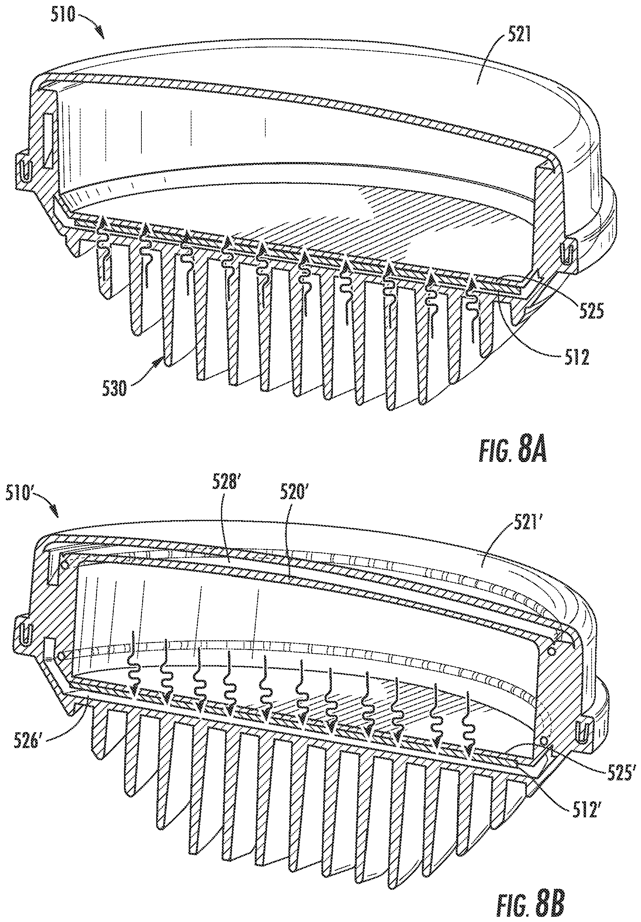

Figures 8a, 8b, and 8c are cross-sectional view of a mechanism 510 for reducing water based contamination from a headlamp assembly 10 including a solid state heat pump 512. Figure 8a illustrates mechanism 510 with a single lens 521. Heat sources, including light emitting diodes and a circuit board 525 are also provided. In the embodiment of figure 8a, heat is transferred by way of solid state heat pump 512. As discussed above, heat pump 512 transfers heat from a heat sink 530 towards circuit board 525. Thus, heat from heat sources, including circuit board 525 is directed towards lens 521 to heat lens 521 for reducing water based contamination from a headlamp assembly 10.

The embodiment shown in Figure 8b is also a mechanism 510' for reducing water based contamination from a lens, wherein a heat pump 512' is employed. Mechanism 510' includes inner lens 520' and outer lens 521'. As discussed with respect to Figure 5, heat generated by light emitting diodes and associated circuitry on circuit board 525' is transferred to a channel 526' via a convection process. A channel 528' for transferring fluid is also located between inner and outer lenses 520' and 521'. Heat sources, including light emitting diodes and a circuit board 525' are also provided. In the embodiment of figure 8b, a solid state heat pump 512' is positioned below circuit board 525' and acts to draw heat from circuit board 525' and the light emitting diodes. The heat is then transferred to from heat pump 512' to channel 528' to heat the fluid within the channel. The heated fluid then travels up channels formed in the sides of mechanism to channel 528. The heated air may then heat lens 521 for reducing water based contamination from a headlamp assembly 10. Transferring heat away from circuit board 525' and light emitting diodes also reduces the temperature of the circuit elements and light emitting diodes, thereby preventing degradation due to heat.

Figure 8c depicts a mechanism 510" for reducing water based contamination from a lens, wherein a first heat pump 512" and a second heat pump 513" employed. Mechanism 510" includes inner lens 520" and outer lens 521". Heat generated by light emitting diodes and associated circuitry on circuit board 525' is transferred to a channel 526" via a convection process. A channel 528" for transferring fluid is also located between inner and outer lenses 520" and 521". First solid state heat pump 512" is positioned below circuit board 525" and acts to draw heat from circuit board 525" and the light emitting diodes. The heat is then transferred to from heat pump 512" to channel 526" to heat the fluid within the channel. In addition, a second heat pump 513" is positioned adjacent to heat sink 530" for transferring heat from heat sink 530" towards channel 526". The heated fluid then travels up channels formed in the sides of mechanism 510" to channel 528". The heated air may then heat lens 521 for reducing water based contamination from a headlamp assembly 10.

Figs. 9a and 9b represent alternative embodiments of a mechanism 610, 610' for reducing water based contamination from a headlamp assembly 10 utilizing a single lens structure. As shown, a device that moves air, such as a fan or air pump, 612, 612', is positioned in a compartment 613, 613', below circuit board 625, 625' and in close proximity to a channel 626, 626'. Heat from circuit board 625, 625' is drawn into channel 626, 626' and through passages 627, 627' toward compartment 613, 613'. Fan, 612, 612' acts to force the air into a chamber 628, 628' within mechanism 610,610' to circulate in order to prevent warm air from becoming trapped in one particular area. Warm air radiating from the Light emitting diodes and circuit board 625, 625' rises up to lens 630, 630'. If snow or ice has accumulated on lens 630, 630', this heat will aid in melting the snow and/or ice. If, however, the temperature of lens 630, 630', is the same or warmer than the air inside chamber 628, 628', heat will tend to build up in the area below lens 630, 630' and above circuit board 625, 625' causing a risk to the Light emitting diodes and other circuitry. Fan 612, 612' pulls cooler, more dense air, which naturally migrates toward the bottom portion of the headlamp, up to the portion between lens 630, 630' and circuit board 625, 625', thus facilitating a replacement of warmer air trapped within the this area. As shown, one or more holes 632, 632' may be provided in circuit board 625, 625' to facilitate transfer of air from the bottom portion of mechanism 610, 610', through holes 632, 632' and into chamber 628, 628', thereby circulating air throughout mechanism 610, 610', and particularly circulating warm air generated by the Light emitting diodes and circuitry to facilitate reducing water based contamination from a headlamp assembly 10. The embodiment of figure 9b includes a solid state heat pump or thermal slug 635 to further included to assist in reducing water based contamination from a headlamp assembly 10. Heat pump 635 draws heat from circuit board 625' and light emitting diodes down into a channel 626' where the heat is transferred, via fan 612', to air within channel 628'in the manner described above.

As illustrated in each of figures 10-13 a resistive heating element may be embedded the outer lens of any of the previously discussed embodiments. With respect to figure 10, a mechanism 710 for reducing water based contamination from a headlamp assembly 10 is shown with resistive heating element 712. Heating element 712 is powered by circuit board 725 and provides heat to lens 730 when snow and ice accumulate on the lens, to thereby clear the lens from water-based contamination which can act as a filter decreasing transmittance of light through lens 730.

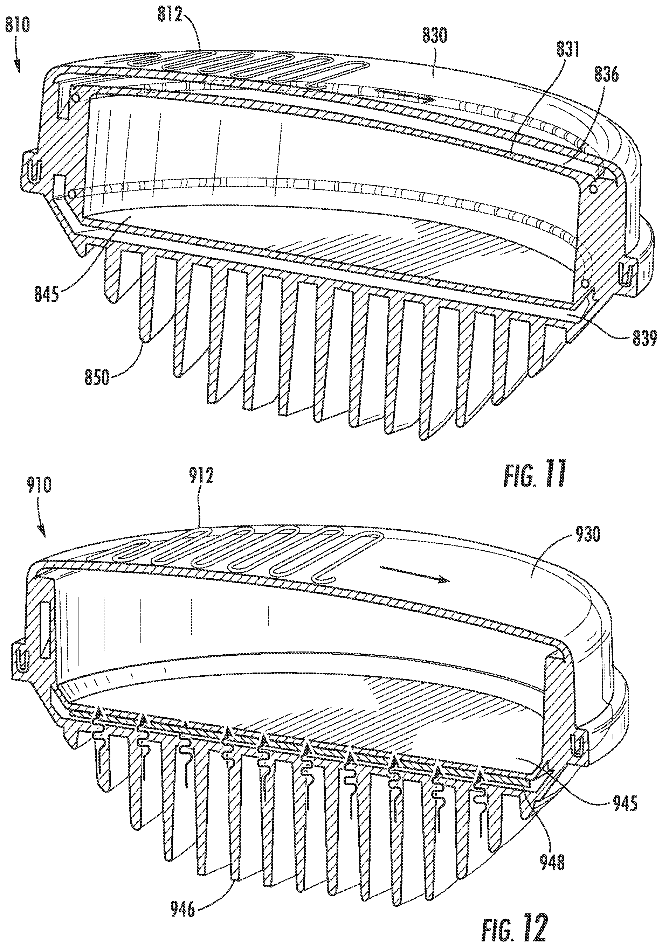

Fig. 11 illustrates an alternative embodiment to that disclosed in Fig. 10. A mechanism 810 for reducing water based contamination from a headlamp assembly 10 is shown with resistive heating element 812 embedded in an outer lens 830. An inner lens 831 is also shown with a channel 836 formed therebetween. Fluid within channel 836 flows through side channels and through channel 839, which is formed between circuit board 845 and heat sink 850.

Once heated, resistive heating element 812 provides heat to outer lens 830 in order to facilitate the removal of water-based contamination such as snow and ice from the outer lens. In addition, resistive heating element 812 provides a means of promoting circulation of fluid within channels 836 and 839 by transfer of heat to the fluid causing the molecules of the fluid to move rapidly to thereby increase flow of fluid.

Fig. 12 represents a modified version of the embodiment disclosed in Fig. 10. A mechanism 910 for reducing water based contamination from a headlamp assembly 10 is shown with resistive heating element 912 embedded in a single lens 930. The resistive heating element 912 is powered by circuit board 945 and provides heat to lens 930 when snow and ice accumulate on the lens, to thereby clear the lens from water-based contamination which can act as a filter decreasing transmittance of light through lens 930.

In addition, as shown by the arrows, warm air originating from Light emitting diodes and circuit board 945 and associated circuitry is transferred to lens 930 via heat pump 948. Heat from heat sink 946 is also transferred toward lens 930. Thus, lens 930 is provided with heat both by a resistive heating element 912 as well as transfer of heat radiating from the Light emitting diodes and circuit board 945 by way of heat pump 948. This creates a two-fold advantage, in that water-based contamination is melted from lens 930 thereby increasing optical transmittance, and heat is reduced in the area of the Light emitting diodes and associated circuitry thereby extending the useful life of the headlamp. Heat pump operates in the manner described in relation to figure 8a.

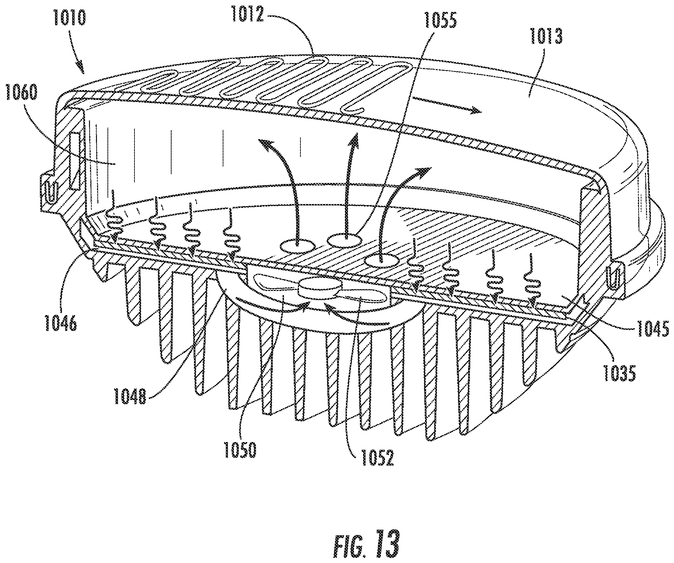

The embodiment shown in figure 13 is a mechanism 1010 for reducing water based contamination from a headlamp assembly 10 is shown with resistive heating element 1012 embedded in a lens 1013. As described with respect to the embodiment of figure 9b, mechanism 1010 includes a solid state heat pump or thermal slug 1035 to further assist in reducing water based contamination from a headlamp assembly 10. Heat pump 1035 draws heat from circuit board 1045 and light emitting diodes down into a channel 1046 where the heat is transferred through passages 1048 to chamber 1050. A fan 1052 directs air through openings 1055 and into chamber 1060 towards lens 1013 in the manner described above.

A control system may be utilized in any one of the embodiments discussed supra. The system includes temperature sensor which monitors the temperature in and around the lens structure. Sensor 520 may comprise a Resistive Temperature Detector (RTD), Positive Temperature Coefficient Thermistor (PTC), or any other type of temperature sensor known in the art including variable resistors, thermistors, bimetal circuits, bimetal switches, as well as linear and switch mode current regulators. The temperature read by the sensor is converted to a signal and transferred to a comparator. The Comparator compares the actual temperature reading to a threshold temperature value stored within the device. If the actual temperature is below the threshold value, the comparator sends a signal to a switch in order to activate the heating element, thermal transfer fluid circulating device, or Peltier heat pump to thereby heat the dual or single lens structure in order to melt water-based contamination accumulating on the LED lamp. Similarly, when the actual temperature read by the sensor is above the threshold temperature value, comparator will send a signal to the switch in order to deactivate heating element, thermal transfer fluid circulating device, or Peltier heat pump and heat will thus be stored by the heat sink and eventually exhausted to the atmosphere if necessary via fins.

An additional embodiment is illustrated and described in connection with Figures 14- 19 including a headlamp assembly 1100 for a vehicle includes a 7-in round housing 1115 for coupling headlamp assembly 1110 to a vehicle, first and second reflector portions 1120 and 1121 and a heat sink structure 1125, which is a planar body that bisects housing into upper and lower areas, 1127 and 1128. Heat sink structure 1125 supports light emitting diode assemblies and a circuit board, as will be discussed in detail below. Further details of headlamp assembly 1100 are described in co-pending patent application serial number 13/024,320. Headlamp assembly 1100 includes a lens 1130 that is heated for the purpose of preventing lens contamination related to the accumulation of water in the form of fog, frost, snow, or ice, which may exist under various environmental conditions.

A resistive wire heating element 1135 is embedded into lens material 1130 using ultrasonic technology. The embedding via ultrasonic technology may be performed through robotics to easily accommodate variations in lens surface, variables in wire patterns, and for improved accuracy and speed. Wire heating element 1135 may also be attached to non-embeddable materials using ultrasonic technology with the use of coated wire wherein the coating material is melted ultrasonically, thereby becoming an adhesive between wire heating element 1135 and the non-embeddable material. Resistive wire heating element 1135 may include a copper core with a silver coating to prevent corrosion of wire heating element 1135. Typically resistive wire heating element 1135 is embedded in lens 1130 at a depth approximately 2/3 of the full wire diameter (2/3d). In one embodiment, the diameter of resistive wire heating element 1135 is approximately 3.5/1000 inches so the embedding depth is between.0023333333 to.0035 inches. The wire is embedded by tapping it into the lens at a frequency which locally excites the lens molecules causing the lens to melt locally to the wire. Force control is used to prevent pushing the wire down farther than desired (so that the embedding head does not directly impact the lens).

An encapsulating material may be used to cover wire heating element 1135 on an inside surface of lens 1130 to prevent localized superheating (i.e. fusing) of wire heating element 1135 due to exposure to air. When wire heating element 1135 is exposed directly to the air the heat generated in wire heating element 1135 cannot transfer fast enough to the air through convection. Thus, the temperature of wire heating element 1135 exceeds the melt temperature of wire heating element 1135. The encapsulating material prevents overheating by accepting heat transfer through conduction on the order of 1000 faster than convection to the air. Thus, the temperature of wire heating element 1135 is not raised enough to melt the wire, the lens, or the encapsulating material(s). A suitable encapsulating material is Red Spot. Other encapsulating materials that are Department of Transportation compliant, as specified for optical grade materials / coatings, must have adequate adhesion to the lens material, must have temperature limitations not less than that of the lens material or the heater wire maximum temperature under prescribed conditions, and must not violate other design features / parameters. The encapsulating material also helps to prevent wire heating element 1135 from coming free from lens 1130 due to random vibration or impact.

A coating or encapsulating material may also be applied on an outside surface of lens 1130 to protect lens 1130 against deterioration from weather (UV rays, heat, cold, rain, snow, and ice). It also resists damage from sand and dirt. It is specifically required on polycarbonate headlamp lenses to meet FMVSS 108 abrasion test requirements and chemical resistance (ASTM Fuel Reference C, Tar Remover, Power Steering Fluid, Antifreeze, and windshield washer fluid). The coating material may or may not be UV or thermally cured. Some alternative coating materials are Momentive PHC 587, Momentive AS 4700, and Red Spot 620V.

Wire heating element 1135 is actively controlled in order to increase performance and efficiency of the wire heating element 1135. A heating element circuit board 1140 is universally attached to the headlamp circuit board such that wire heating element 1135 may be used in various lamp designs. Thermal compression bonding or welding is utilized to attach heating element circuit board 1140 to lens 1130. Heating element circuit board 1140 may be affixed to lens 1130 using a two component, 1:1 mix ratio epoxy from Star Technology (Versabond ER1006LV). Alternate adhesives may be used based on temperature range, adhesive strength/durability, outgassing properties, chemical reactivity, flexibility, application method, cure time, appearance, availability, and cost. Acceptable adhesives include non-cyanoacrylate based adhesives.

An attachment area is provided on either side of heating element circuit board 1140 wherein the wire heating element 1135 can be embedded into lens 1130 and routed such that wire heating element 1135 crosses over heating element circuit board 1140 as well as applicable conducting pad areas 1145 therein. Heating element circuit board 1140 includes a thermistor 1150 on the outward facing side for heater control feedback purposes. Heating element circuit board 1140 and thermistor 1150 are placed into lens 1130 such that the distance between the thermistor outer surface and the lens outer surface does not exceed 1/10 the distance from the thermistor outer surface and the lens inner surface at any one point for the purpose of minimizing the thermal impedance between the thermistor and outer lens surface and maximizing the thermal impedance between the thermistor and the inner lens surface. Thermal impedance is therefore manipulated by varying the thermistor's distance from the inner and outer lens, represented by the equation: $D_o < (1/10)D_i$ where $D_o$ = the distance from the thermistor to the outer lens and $D_i$ = the distance between the thermistor and inner lens. Therefore, the resistance to heat transfer is at least 10 times more from the thermistor to the inside air compared to the resistance to heat transfer between the thermistor and the outside of the lens.

The resistance of thermistor 1150 may be used to accurately predict the outer lens surface temperature wherein the ratio of distances versus the desired accuracy of the control system feedback is calculated and validated empirically. Thermal impedance is the resistance to transfer heat from any one point to any other point (if the thermal impedance is high, less heat transfer will occur and vice versa). The thermisor needs to be sensitive to temperature changes on the lens surface because that is the surface from which water-based contamination such as snow and ice is removed. Therefore, it is necessary to have a very low thermal impedance from the thermistor to the outer lens surface. In this case, the lens material and outer lens coating are the thermal barriers between the thermistor and the outer lens. In addition, it is important to maximize the resistance from the thermistor to the inside of the lamp so the inside lamp temperature does not affect the temperature reading sensed by the thermistor.

The thermistor is essentially a surface mount resistor having approximate dimension:.03 x.065 x.03 inches (width, length, height) that is comprised mainly of alumina. The thermistor operates under a programmable logic sequence in order for the heating wire to be activated/deactivated automatically in order to melt snow and ice on the lens. The thermistor is used to provide feedback to the micro-controller in the form of a resistance. This resistance is correlated to a temperature that the micro-controller stores and uses to decide whether the heater should be on or off and at what level of power. The resistance/conductivity of wire heating element 1135, as well as that of the actual thermistor 1150 and heating element circuit board 1140, is factored-in to optimize the operation of the thermistor. In one embodiment, wire heating element 1135 is adapted to activate at 10 °C and deactivate at 15 °C. However, the micro-controller may also be programmed to activate or deactivate wire heating element 1135 based on a resistance that is stored in the microcontroller from current and voltage that is associated with a specific temperature. The thermistor manufacturer provides the data to make the correlation between the resistance and temperature.

In particular, the heater control is a closed loop controller comprised of a programmable micro controller (already existing in headlamp main PCB), the lens thermistor, a current sensing resistor, a voltage sensor, a mosfet, and the heater wire circuit. The micro-controller monitors the outer lens temperature by calculating the lens thermistor's resistance at regular clock intervals, which has a known correlation to temperature. When the temperature is determined to be at or below a set activation temperature (programmed into the micro-controller), the micro-controller provides a signal to the mosfet which connects one leg of the heater circuit to lamp power (the other leg is connected to ground), therein powering the heater. If the temperature is determined to be above a set deactivation temperature (also programmed into the micro-controller), it provides a signal to the mosfet to disconnect the leg of the heater circuit from power, therein removing any power in the heater circuit. The micro-controller can also modulate power for the purpose of power regulation. Further, the microcontroller calculates heater wire temperature and will regulate heater power to prevent the heater wire from exceeding the melt or softening temperature of the lens material as needed.

The wire heater circuit board contains conductive pads to facilitate heater circuit leads in consideration of the circuit configuration plus two thermistor control leads. The conductive pads may be formed of copper covered nickel coated with gold to provide a non-corroding, malleable surface that is conducive to welding or thermal compression bonding of wire heating element 1135, as well as additional electrical attachment via spring containing (pogo) pins. In general, thermal compression bonding includes applying high temperature and pressure (locally) to mechanically fuse two materials together. Typically, a hard material is superimposed onto the end of a pressing mechanism capable of high pressure with a heating element used to heat the hard material. The two materials desired to be bonded together are pressed together with substantial force while the hard material on the end of the press is heated causing the two materials to bond together at the molecular level. The process can be used to bond similar materials (metal to metal) or dissimilar materials (metal to ceramic) together effectively.

A harness 1160 with universal terminations 1161, 1162 on either end will be used to connect heating element circuit board 1140 and thermistor 1150 to the lamp main circuit board. Termination 1162 of harness 1160 at the main circuit board end will allow for bi-directional attachment to the main circuit board by fixing the locations of the leads on the main circuit board end such that the thermistor leads are each at either extreme end thereof, with a common lead between heater wire circuit board 1140 in the center position, and the remaining ends of the heater wire circuit board 1140 disposed therebetween (blank spaces as may be necessary). The lens side termination 1161 of the harness 1160 shall be fixed in the lamp housing such that lens 1130 requires no hardwire attachment between itself and the lamp main body or components therein, to prevent interfering with the standard process of attaching lens 1130 to the lamp main body. Pins 1165 are used in the lens-side termination 1161 of harness 1160 that connects leads of wire heater circuit board 1140 and thermistor 1150 to the headlamp main circuit board. Specifically, ends of spring pins 1165 contact gold plated pads on heating element circuit board 1140. Spring pins 1165 are spring loaded with a maximum stroke of 0.090 inches. The spring applies a force to keep the terminals contacting the pads on circuit board 1140 allowing for a compliant connection. Spring pins 1165 account for thermal expansion, movement due to vibration and/or shock, as well as tolerance stack-up of the assembly. During assembly, spring pins 1165 are installed in an injection molding tool, prior to overmolding material being injected into the cavity. The material (PBT Valox) is injected into the core/cavity of the injection molding tool and completely surrounds the outside body of spring pins to form a rigid body/structure around the pins.

The headlamp housing is a die-cast housing that functions as a heat sink. The housing also includes receiving features for harness 1160. In particular, the housing includes a flat seating plane 1170, two tapered pins 1172, and a guide channel 1173. Harness 1160 includes an over-molded lens-side connector body with tapered holes 1175 that mate with tapered pins 1172 for the purpose of connector alignment, as well as an extrusion 1177, that fits into the guide channel 1173 for the purpose of countering the moment created by pressing on spring pins 1165. A moment results in the assembly because the flat seating plane 1170 in the housing, which harness 1160 seats against when installed, provides a normal force that offsets the spring force in the spring pins 1165, which is not directly in-line with that force. The extrusion 1177 on harness 1160 that fits into guide channel 1173 presses against the side of the channel and creates a coupling force preventing harness 1160 from rotating due to the misalignment of applied spring force and seating plane 1170 normal force.

The area of the lens to be heated is first determined by considering the area(s) of the lens that light passes through for the lamp function(s) that will be active (or desired) when lens heating is necessary. From this data, the required heater power is determined using ambient temperature set to the lowest defined operating temperature of the lamp, an assumed water based contamination layer on the lens exterior (approximately 2 mm thick), lens material and thickness, and required wire spacing (assuming uniform and non-segmented heating is desired). Other considerations include lamp internal air temperature prediction based on the previously listed parameters and heat dissipation from active lamp functions (CFD used for this), time desired/required to remove the water based contamination, assumed air convection coefficient inside and outside of the lamp, latent heat of fusion of ice, density of ice, and heat capacity of all material in the heat transfer paths (including the ice). This information is used to mathematically express heat transfer from the wire to the air (both inside and outside of the lamp) and the amount of energy to raise the temperature of the ice to zero °C and convert the ice to water as a function of time. The mathematical expressions are combined and solved to determine the amount of power required from the heater wire to melt the ice in the desired/required time period so that once the ice is melted, the water runs off the lens due to gravity.

When multiple operating voltages are required, multiple heating element circuits are used and configured in series, parallel, or a combination of series and parallel in order to attain uniform heater power at any of the prescribed input voltages for a linear type heater driver. Alternately, a switcher type driver may be used with a single heater circuit. The inherent resistance of the control system components including the thermistor in the lens must be offset in one of the heating element circuits for systems with multiple heating element circuits to ensure uniform heating between circuits (unless otherwise desired), because that resistance adds to the heating element circuit, therein reducing the amount of current that flows through it compared to other circuits. This is readily achieved by modifying the length of each circuit such that the resistances balance when the control system net resistance is added to one circuit. Straight paths of the heater circuit as embedded into the lens are minimized to reduce the appearance of light infringement within the optical pattern in order to produce a clearer more vivid shape that is more easily perceived by the human eye. Additionally, the embedding process creates a meniscus of lens material along the heater wire. The shape of this meniscus bends light around the wire such that, for a curved path, light bent away from the wire which leaves a void at angle A, will be bent toward a void at angle B, thus reducing the clarity or even eliminating such void.

It will be understood by those skilled in the art that the above disclosure is not limited to the embodiments discussed herein and that other methods of controlling heating element, thermal transfer fluid circulating device, or Peltier heat pump may be utilized. These methods may include manual activation and deactivation of heating element, thermal transfer fluid circulating device, or Peltier device via an on/off switch. Other alternative embodiments include continuous activation of the elements so that LED lamp temperature is high enough to prevent accumulation of water-based contamination but low enough to prevent inadvertent thermal deterioration of the LED lamp and its components.

## Claims

1. A headlamp assembly (1100) comprising:

   a housing (1115) for coupling the headlamp assembly (1100) to a vehicle, the housing (1115) including a reflector (1120, 1121);
   a planar heat sink structure (1125) having a first surface and a second surface;
   a main circuit board supported by the heat sink (1125);
   a first light emitting diode assembly supported by the first surface of the heat sink structure (1125) and
   a second light emitting diode assembly supported by the second surface of the heat sink structure (1125), each of the first and second light emitting diode assemblies being electrically connected to the main circuit board;
   a lens (1130) affixed to the housing (1115) having an inner surface (1127) and an outer surface (1128);
   a wire heating element circuit board (1140) affixed to said lens (1130);
   a wire heating element (1135) embedded within the inner surface of the lens (1130), and electrically coupled to the wire heating element circuit board (1140);
   an encapsulation layer disposed over the wire heating element (1135);

   characterized in that the assembly further comprises a thermistor (1150) for providing a resistance, said thermistor being placed in the lens (1130) between said inner surface and said outer surface of said lens, thereby minimizing the thermal impedance between the thermistor and outer surface of the lens and maximizing the resistance from the thermistor to an inside of the lamp, said thermistor (1150) being electrically coupled to said wire heating element circuit board (1140); and

a micro-controller for determining the temperature of the outer surface of the lens based on the resistance provided by the thermistor, said wire heating element being activated in response to the temperature of the outer surface of the lens being at or below a set activation temperature above but near zero degrees Celsius so as to prevent the formation of snow or ice on said outer surface of said lens.

2. The headlamp assembly (1100) of claim 1, wherein the wire heating element (1135) comprises a copper core and a silver coating.

3. The headlamp assembly (1100) of claim 1, wherein said wire heating element circuit board (1140) is electrically connected to said main circuit board.

4. The headlamp assembly (1100) of claim 1, wherein a harness (1160) connects said wire heating element circuit board (1140) and thermistor (1150) to said main circuit board.

5. The headlamp assembly (1100) of claim 1, wherein pins (1165) connect said harness (1160) to said main circuit board.

6. The headlamp assembly (1100) of claim 1, wherein said housing (1115) functions as a heat sink (1125).

7. The headlamp assembly (1100) of claim 1, wherein said heat sink (1125) bisects said housing (1115) into upper (1127) and lower (1127) areas.

8. The headlamp assembly (1100) of claim 1, wherein said wire heating element (1135) is embedded in said lens (1130) at a depth of $5{,}93 \times 10^{-3}$ to $8{,}89 \times 10^{-3}$ mm ($2.3 \times 10^{-3}$ to $3.5 \times 10^{-3}$ inches).

9. The headlamp assembly (1100) of claim 1, wherein said wire heating element (1135), wire heating element circuit board (1140), and thermistor (1150) are embedded in said lens (1130).

10. The headlamp assembly (1100) of claim 1, wherein a distance from an outer surface of said thermistor (1150) to the outer surface of said lens (1130) is no more than one tenth of a distance between said outer surface of the thermistor (1150) and the inner surface of said lens (1130), represented by an equation: $Do \leq (1/10)Di$, where $Do$ = the distance from the thermistor (1150) to the outer surface of the lens (1130) and $Di$ = the distance between the thermistor (1150) and the inner surface of the lens (1130).

11. The headlamp assembly (1100) of claim 4, wherein a plurality of spring loaded pins (1165) disposed on said harness (1160) connect leads of said wire heating element circuit board (1140) and thermistor (1150) to the main circuit board.

12. The headlamp assembly (1100) of claim 4, wherein said housing (1115) includes receiving features adapted to receive said harness (1160).

13. The headlamp assembly (1100) of claim 12, wherein said receiving features comprise a flat seating plane (1170), a plurality of tapered pins (1172), and a guide channel (1173).

14. The headlamp assembly (1100) of claim 13, wherein said harness (1160) includes an extrusion (1177) that fits into said guide channel (1173).

15. The headlamp assembly (1100) of claim 13, wherein said harness (1160) comprises tapered holes (1175) that mate with said tapered pins (1172).

**Patentansprüche**

1. Scheinwerferanordnung (1100) aufweisend:

ein Gehäuse (1115) zum Verbinden der Scheinwerferanordnung (1100) mit einem Fahrzeug, wobei das Gehäuse (1115) einen Reflektor (1120, 1121) enthält;
eine planare Kühlkörperstruktur (1125) mit einer ersten Fläche und einer zweiten Fläche;
eine durch den Kühlkörper (1125) getragene Hauptschaltkarte;
einen durch die erste Fläche der Kühlkörperstruktur (1125) getragenen ersten Licht emittierenden Diodenaufbau und einen durch die zweite Fläche der Kühlkörperstruktur (1125) getragenen zweiten Licht emittierenden Diodenaufbau, wobei sowohl der erste wie der zweite Licht emittierende Diodenaufbau mit der Hauptschaltkarte elektrisch verbunden ist;
eine Linse (1130), die an dem Gehäuse (1115) festgelegt ist durch die erste Fläche der Kühlkörperstruktur (1125) getragenen ersten Licht emittierenden Diodenaufbau eine Innenseite (1127) sowie eine Außenseite (1128) aufweist;
eine Drahtheizelement-Schaltkarte (1140), die an der Linse (1130) festgelegt ist;
ein Drahtheizelement (1135), dass in die Innenseite der Linse (1130) eingebettet und elektrisch mit der Drahtheizelement-Schaltkarte (1140) verbunden ist;

eine Verkapslungsschicht, die über dem Drahtheizelement (1135) angeordnet ist;

einen Thermistor (1150) zum Bereitstelleneines Widerstands, wobei der Thermistor in der Linse (1130) zwischen der Innenseite und der Außenseite der Linse unter Minimierung der thermischen Impedanz zwischen dem Thermistor und der Außenseite der Linse sowie unter Maximierung des Widerstands von dem Thermistor zu einer Innenseite der Lampe angeordnet ist, wobei der Thermistor (1150) elektrisch mit der Drahtheizelement-Schaltkarte (1140) verbunden ist; und

eine Mikro-Controller zum Ermitteln der Temperatur der Außenseite der Linse auf Grundlage des durch den Thermistor bereitgestellten Widerstands, wobei das Drahtheizelement in Reaktion der Temperatur der Außenseite der Linse aktiviert wird, die sich auf oder unter einer Sollaktivierungstemperatur über, jedoch nahe null Grad Celsius befindet, um die Bildung von Schnee oder Eis auf der Außenseite der Linse zu unterbinden.

2. Scheinwerferanordnung (1100) nach Anspruch 1, wobei das Drahtheizelement (1135) einen Kupferkern und einen Silberüberzug umfasst.

3. Scheinwerferanordnung (1100) nach Anspruch 1, wobei die Drahtheizelement-Schaltkarte (1140) **elektrisch mit der Hauptschaltkarte verbunden ist.**

4. Scheinwerferanordnung (1100) nach Anspruch 1, wobei ein Kabelbaum (1160) die Drahtheizelement-Schaltkarte (1140) und den Thermistor (1150) mit der Hauptschaltkarte verbindet.

5. Scheinwerferanordnung (1100) nach Anspruch 1, wobei Stifte (1165) den Kabelbaum (1160) mit der Hauptschaltkarte verbinden.

6. Scheinwerferanordnung (1100) nach Anspruch 1, wobei das Gehäuse (1115) als Kühlkörper (1125) dient.

7. Scheinwerferanordnung (1100) nach Anspruch 1, wobei der Kühlkörper (1125) das Gehäuse (1115) in obere (1127) und untere (1127) Bereiche unterteilt.

8. Scheinwerferanordnung (1100) nach Anspruch 1, wobei das Drahtheizelement (1135) in die Linse (1130) auf eine Tiefe von 5,93 x 10$^{-3}$ bis 8,89 x 10$^{-3}$ mm (2.3 x 10$^{-3}$ to 3.5 x 10$^{-3}$ Inch) eingebettet ist.

9. Scheinwerferanordnung (1100) nach Anspruch 1, wobei das Drahtheizelement (1135), die Drahtheizelement-Schaltkarte (1140), und der Thermistor (1150) in die Linse (1130) eingebettet sind.

10. Scheinwerferanordnung (1100) nach Anspruch 1, wobei die Distanz von einer Außenseite des Thermistor (1150) zur Außenseite der Linse (1130) nicht mehr al sein Zehntel der Distanz zwischen der Außenseite des Thermistor (1150) und der Innenseite der Linse (1130) beträgt, dargestellt durch eine Gleichung: Do ≤ (1/10)Di, wobei Do = die Distanz von dem Thermistor (1150) zur Außenseite der Linse (1130), und wobei Di = die Distanz zwischen dem Thermistor (1150) und der Innenseite der Linse (1130).

11. Scheinwerferanordnung (1100) nach Anspruch 4, wobei mehrere federvorgespannte Stifte (1165), die auf dem Kabelbaum (1160) angeordnet sind, die Leiterbahnen der Heizelement-Schaltkarte (1140) und den Thermistor (1150) mit der Hauptschaltkarte verbinden.

12. Scheinwerferanordnung (1100) nach Anspruch 4, wobei das Gehäuse (1115) Aufnahmeelemente umfasst, die dazu ausgelegt sind, den Kabelbaum (1160) aufzunehmen.

13. Scheinwerferanordnung (1100) nach Anspruch 12, wobei die Aufnahmeelemente eine flache Sitzebene (1170), mehrere verjünge Stifte (1172), und einen Führungskanal (1173) aufweisen.

14. Scheinwerferanordnung (1100) nach Anspruch 13, wobei der Kabelbaum (1160) einen Vorsprung (1177) aufweist, der in den Führungskanal (1173) passt.

15. Scheinwerferanordnung (1100) nach Anspruch 13, wobei der Kabelbaum (1160) verjüngte Löcher (1175) aufweist, die mit den verjüngten Stiften (1172) zusammenpassen.

**Revendications**

1. Ensemble de phare (1100) comprenant :

un boîtier (1115) pour coupler l'ensemble de phare (1100) à un véhicule, le boîtier (1115) comprenant un réflecteur (1120, 1121) ;

une structure de puits de chaleur plane (1125) ayant une première surface et une seconde surface ;

une plaquette de circuits imprimés principale supportée par le puits de chaleur (1125) ;

un premier ensemble de diodes électroluminescentes supporté par la première surface de la structure de puits de chaleur (1125) et un second ensemble de diodes électroluminescentes supporté par la seconde surface de la structure de puits de chaleur (1125), chacun des premier et second ensembles de diodes électroluminescentes étant connecté électriquement à la plaquette de circuits imprimés principale ;

une lentille (1130) fixée au boîtier (1115) ayant une surface interne (1127) et une surface externe (1128) ;

une plaquette de circuits imprimés (1140) d'élément de chauffage de fil métallique fixée à ladite lentille (1130) ;

un élément de chauffage de fil métallique (1135) noyé dans la surface interne de la lentille (1130) et couplé électriquement à la plaquette de circuits imprimés (1140) de l'élément de chauffage de fil métallique ;

une couche d'encapsulation disposée sur l'élément de chauffage de fil métallique (1135) ;

un thermistor (1150) pour fournir une résistance, ledit thermistor étant placé dans la lentille (1130) entre ladite surface interne et ladite surface externe de ladite lentille, minimisant de la sorte l'impédance thermique entre le thermistor et la surface externe de la lentille et maximisant la résistance du thermistor à l'intérieur de la lampe, ledit thermistor (1150) étant couplé électriquement à ladite plaquette de circuits imprimés (1140) de l'élément de chauffage de fil métallique ; et

un microcontrôleur pour déterminer la température de la surface externe de la lentille sur la base de la résistance fournie par le thermistor, ledit élément de chauffage de fil métallique étant activé en réponse à la température de la surface externe de la lentille qui se situe à une température d'activation réglée, ou en dessous de celle-ci, supérieure mais proche de zéro degré Celsius de manière à empêcher la formation de neige ou de glace sur ladite surface externe de ladite lentille.

2. Ensemble de phare (1100) selon la revendication 1, dans lequel l'élément de chauffage de fil métallique (1135) comprend une âme de cuivre et une enduction d'argent.

3. Ensemble de phare (1100) selon la revendication 1, dans lequel ladite plaquette de circuits imprimés (1140) de l'élément de chauffage de fil métallique est connectée électriquement à ladite plaquette de circuits imprimés principale.

4. Ensemble de phare (1100) selon la revendication 1, dans lequel un harnais (1160) connecte ladite plaquette de circuits imprimés (1140) de l'élément de chauffage de fil métallique et le thermistor (1150) à ladite plaquette de circuits imprimés principale.

5. Ensemble de phare (1100) selon la revendication 1, dans lequel des broches (1165) connectent ledit harnais (1160) à ladite plaquette de circuits imprimés principale.

6. Ensemble de phare (1100) selon la revendication 7, dans lequel ledit boîtier (1115) fonctionne comme puits de chaleur (1125).

7. Ensemble de phare (1100) selon la revendication 1, dans lequel ledit puits de chaleur (1125) coupe ledit boîtier (1115) en zones supérieure (1127) et inférieure (1127).

8. Ensemble de phare (1100) selon la revendication 1, dans lequel ledit élément de chauffage de fil métallique (1135) est noyé dans ladite lentille (1130) à une profondeur de 5,93 x $10^{-3}$ à 8,89 x $10^{-3}$ mm (2,3 x $10^{-3}$ à 3,5 x $10^{-3}$ pouces).

9. Ensemble de phare (1100) selon la revendication 1, dans lequel ledit élément de chauffage de fil métallique (1135), ladite plaquette de circuits imprimés (1140) de l'élément de chauffage de fil métallique et le thermistor (1150) sont noyés dans ladite lentille (1130).

10. Ensemble de phare (1100) selon la revendication 1, dans lequel une distance d'une surface externe dudit thermistor (1150) à la surface externe de ladite lentille (1130) n'est pas supérieure à un dixième d'une distance entre ladite surface externe du thermistor (1150) et la surface interne de ladite lentille (1130), représentée par une équation : $Do \leq (1/10)Di$, où $Do$ = la distance du thermistor (1150) à la surface externe de la lentille (1130) et $Di$ = la distance entre le thermistor (1150) et la surface interne de ladite lentille (1130).

11. Ensemble de phare (1100) selon la revendication 4, dans lequel une pluralité de broches (1165) sollicitées par un ressort et disposées sur ledit harnais (1160) connecte des conducteurs de ladite plaquette de circuits imprimés (1140) de l'élément de chauffage de fil métallique et dudit transistor (1150) à la plaquette de circuits imprimés principale.

12. Ensemble de phare (1100) selon la revendication 4, dans lequel ledit boîtier (1115) comprend des caractéristiques réceptrices adaptées pour recevoir ledit harnais (1160).

13. Ensemble de phare (1100) selon la revendication 12, dans lequel lesdites caractéristiques réceptrices comprennent une plaque de siège plane (1170), une pluralité de broches coniques (1172) et un canal de guidage (1173).

**14.** Ensemble de phare (1100) selon la revendication 13, dans lequel ledit harnais (1160) comprend une extrusion (1177) qui s'ajuste dans ledit canal de guidage (1173).

**15.** Ensemble de phare (1100) selon la revendication 13, dans lequel ledit harnais (1160) comprend des trous coniques (1175) qui s'adaptent auxdites broches coniques (1172).

FIG. 1

FIG. 2A

FIG. 2B

FIG. 3A

FIG. 3B

FIG. 3C

FIG. 4A

FIG. 4B

FIG. 5

FIG. 6A

FIG. 6B

FIG. 7A

FIG. 7B

FIG. 8A

FIG. 8B

*FIG. 8C*

*FIG. 9A*

610'

632'

628'

626'

625'

635'

613'

612'

627'

*FIG. 9B*

710

712

730

725

*FIG. 10*

FIG. 11

FIG. 12

FIG. 13

1141

1130

FIG. *14A*

1130

1135

1141

FIG. *14B*

FIG. 15A

FIG. 15B

FIG. 16A

FIG. 16B

FIG. 16C

FIG. 17A

FIG. 17B

FIG. **18A**

FIG. **18B**

1100

1135

1115

1130

FIG. 19

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20100008099 A
- WO 13024320 A